# EUROPEAN PATENT APPLICATION

(11) **EP 4 567 923 A1**
(43) Date of publication of application: **11.06.2025**
(21) Application number: 23916720.8
(22) Date of filing: 18.01.2023
(51) Int. Cl.: H01M 4/36, H01M 4/525, H01M 4/505, H01M 4/485, H01M 10/0525

(54) **POSITIVE ELECTRODE ACTIVE MATERIAL, POSITIVE ELECTRODE SHEET, SECONDARY BATTERY, AND ELECTRIC DEVICE**

(71) Applicant: Contemporary Amperex Technology (Hong Kong) Limited, Central, Hong Kong (CN)
(72) Inventor: LI, Sheng, Ningde, Fujian 352100 (CN); NI, Huan, Ningde, Fujian 352100 (CN)
(74) Representative: Jacob, Reuben Ellis
(86) International application number: PCT/CN2023/072837
(87) International publication number: WO 2024/152233

(57) **Abstract**

Provided in the present application are a positive electrode active material, a positive electrode sheet, a secondary battery and an electric device. The positive electrode active material comprises a first lithium-nickel transition metal oxide and a second lithium-nickel transition metal oxide, wherein the first lithium-nickel transition metal oxide and the second lithium-nickel transition metal oxide both contain zirconium, the molar content of zirconium in the first lithium-nickel transition metal oxide is smaller than that of zirconium in the second lithium-nickel transition metal oxide, the structure of the first lithium-nickel transition metal oxide is one or more of single-crystal particles or quasi-single-crystal particles, and the second lithium-nickel transition metal oxide is a secondary particle formed by aggregating a plurality of primary particles. The first lithium-nickel transition metal oxide has a stable structure, high strength and better cycle performance at high temperatures; and lithium ions in the second lithium-nickel transition metal oxide are easier to diffuse, and the second lithium-nickel transition metal oxide has better rate capability. The content of zirconium in the first lithium-nickel transition metal oxide is smaller than that of zirconium in the second lithium-nickel transition metal oxide, such that the cycle life of a battery cell is better prolonged on the whole.

## Description

### TECHNICAL FIELD

This application relates to the technical field of batteries, and in particular, to a positive active material, a positive electrode plate, a secondary battery, and an electrical device.

### BACKGROUND

The high price, non-renewability and irreversible impact on the environment of fossil energy make it urgent to develop green, low-carbon and environmentally friendly new energy. Lithium-ion batteries, as electrochemical energy storage devices, are favored by the energy storage and power battery industries due to their large capacity, no memory effect and wide application window. However, with the development of the industry, the pursuit of battery life and lifespan has become increasingly a pain point and consensus in the industry. Ternary materials have attracted widespread attention due to their low cost and high capacity. At present, in order to obtain higher capacity of ternary materials, increasing their working voltage is the most effective way. However, the lifespan of ternary materials decreases significantly under high voltage conditions, especially under high temperature conditions. Therefore, improving the energy density of ternary materials while ensuring their service life has become an industry challenge.

### SUMMARY

This application provides a positive active material, a positive electrode plate, a secondary battery, and an electrical device to improve the energy density and cycle life of the positive active material.

A first aspect of this application provides a positive active material which includes a first lithium-nickel transition metal oxide and a second lithium-nickel transition metal oxide. Both the first lithium-nickel transition metal oxide and the second lithium-nickel transition metal oxide contain zirconium, and a molar content of zirconium element in the first lithium-nickel transition metal oxide is less than a molar content of zirconium element in the second lithium-nickel transition metal oxide, the first lithium-nickel transition metal oxide is of one or more structures of a monocrystalline particle or a quasi-monocrystalline particle, and the second lithium-nickel transition metal oxide is a secondary particle formed by aggregation of a plurality of primary particles.

In the positive active material of this application, the first lithium-nickel transition metal oxide is of one or more structures of a monocrystallinel or a quasi-monocrystalline, and the structures are stable, strong, and not easily cracked in the cycle process, especially with better cycle performance at high temperature; the second lithium-nickel transition metal oxide is a secondary particle formed by the aggregation of the plurality of primary particles, and lithium ions diffuse more easily in this material, so that the discharge specific capacity is larger than that of a single crystal or a quasi-single crystal structure with an equal particle diameter, and the rate performance is better. Moreover, the first lithium-nickel transition metal oxide and the second lithium-nickel transition metal oxide contain zirconium element to further improve the particle strength of the oxides. The enhancement of the particle strength can greatly improve the cracking resistance of the positive electrode material in the cycle process, especially by controlling the molar content of zirconium element in the first lithium-nickel transition metal oxide to be less than the molar content of zirconium element in the second lithium-nickel transition metal oxide, reducing the strength difference between the two oxides, better improving the cycle life of a battery cell as a whole, increasing the depth of charging and discharging, and increasing the mass energy density.

In any embodiment of the first aspect, a ratio of the molar content of zirconium element in the above first lithium-nickel transition metal oxide to the molar content of zirconium element in the second lithium-nickel transition metal oxide is d, and 0.5 ≤ d < 1, optionally 0.7 < d < 1, and further optionally 0.8 ≤ d ≤ 0.9. By controlling the relationship between the zirconium contents, the comprehensive performance of strength and rate performance of the two is improved.

In any embodiment of the first aspect, particle strength of the above first lithium-nickel transition metal oxide is greater than particle strength of the second lithium-nickel transition metal oxide.

In any embodiment of the first aspect, the particle strength of the first lithium-nickel transition metal oxide is 30 MPa-300 MPa, and further optionally 110 MPa-230 MPa.

In any embodiment of the first aspect, the particle strength of the second lithium-nickel transition metal oxide is 20 MPa-250 MPa, and further optionally 90 MPa-210 MPa.

In any embodiment of the first aspect, a difference between the particle strength of the first lithium-nickel transition metal oxide and the particle strength of the second lithium-nickel transition metal oxide is between 10 MPa and 50 MPa, and further optionally between 20 MPa and 30 MPa. By utilizing the above intensity control, the formation of interface cracks in the positive active material in the cycle process is further reduced, improving cycle stability, and prolonging the lifespan of the positive active material.

In any embodiment of the first aspect, a number of the monocrystalline particle contained by the quasi-monocrystalline particle of the above first lithium-nickel transition metal oxide in a Scanning Electron Microscope (SEM) image is ≤ 5/µm². In any embodiment of the first aspect, a number of the primary particles contained by the secondary particle of the second lithium-nickel transition metal oxide in an SEM image is 3/µm²-30/µm². The charging and discharging of the battery cell will cause the shrinkage and expansion of the material, causing the material to crack due to stress, limiting the number of particles in the material, reducing the volume change of the positive active material in the cycle process, and effectively improving the cycle stability of the battery cell.

In any embodiment of the first aspect, a volume particle diameter distribution curve of the positive active material is a bimodal curve, a low peak particle diameter of the bimodal curve is a first peak particle diameter, a high peak particle diameter is a second peak particle diameter, the first peak particle diameter is 2 µm-6 µm, and/or the second peak particle diameter is 6 µm-15 µm. Optimization of material particle gradation may effectively improve the voltage window and compaction density of the material. A high voltage window and compaction density are beneficial to achieving a high volumetric energy density and mass density, thereby significantly improving the endurance of the secondary battery.

In any embodiment of the first aspect, peak separation fitting is performed on the bimodal curve to obtain a small particle fitted peak pattern and a large particle fitted peak pattern, and a particle diameter concentration degree S1 obtained according to the small particle fitted peak pattern and a particle diameter concentration degree S2 obtained according to the large particle fitted peak pattern are each independently 0.1-5, and optionally, the S1 and the S2 are each independently 0.1-3, where S1 = (Dv₁90 -Dv₁10)/ Dv₁50, S2 = (Dv₂90 -Dv₂10)/ Dv₂50, Dv₁N is a particle diameter corresponding to a cumulative volume distribution percentage reaching N% in the small particle fitted peak pattern, Dv₂N is a particle diameter corresponding to a cumulative volume distribution percentage reaching N% in the large particle fitted peak pattern, and N is 10, 50 or 90. The above D_{V}N is measured using a laser particle diameter analyzer. The particle diameter of the positive active material is graded in the above manner, and the interparticle filling property is improved, thereby further improving the compaction density of the positive electrode material.

In any embodiment of the first aspect, a volume particle diameter distribution of the first lithium-nickel transition metal oxide satisfies a small particle fitted peak pattern; and a volume particle diameter distribution of the second lithium-nickel transition metal oxide satisfies the large particle fitted peak pattern. The first lithium-nickel transition metal oxide and the second lithium-nickel transition metal oxide simultaneously realize a better matching relationship in two aspects of composition and particle diameter, which further enhances the compaction density and improves the cyclic cracking defect.

In any embodiment of the first aspect, chemical formulas of the above first lithium-nickel transition metal oxide and the second lithium-nickel transition metal oxide are each independently LiₐNiₓCo_{y}M_{z}R_{b}O_{c}, where 0.9 ≤ a ≤ 1.2, 0.3 ≤ x ≤ 1, 0 ≤ y ≤ 0.4, 0 < z ≤ 0.2, 0 < b ≤ 0.2, 1.8 ≤ c ≤ 2.2, x + y + z + b = 1, M is one or two of Mn and Al, R includes one or more of Na, Sb, C, K, Ca, Zr, Sr, Al, B, Ba, Nb, W, Mo, Co, P, and C, and R must contain Zr. Optionally, a molar amount of Zr in R per mole of the first lithium-nickel transition metal oxide or the second lithium-nickel transition metal oxide is less than or equal to 0.15, and further optionally, the molar amount of Zr in R per mole of the first lithium-nickel transition metal oxide or the second lithium-nickel transition metal oxide is less than or equal to 0.11.

In any embodiment of the first aspect, a Ni element content in the first lithium-nickel transition metal oxide is 0.5 ≤ x ≤ 0.98, and the Ni element content in the second lithium-nickel transition metal oxide is 0.6 ≤ x ≤ 0.98.

The lithium-nickel transition metal oxide with high nickel or low and medium nickel may further improve the power performance of the oxide or enhance the structural stability of the oxide by further doping M and/or R elements.

In any embodiment of the first aspect, the first lithium-nickel transition metal oxide and the second lithium-nickel transition metal oxide each independently include a core and a cladding layer covering the core, and a chemical formula of the core is each independently LiₐNiₓCo_{y}M_{z}R_{b}O_{c}, where 0.9 ≤ a ≤ 1.2, 0.3 ≤ x ≤ 1, 0 ≤ y ≤ 0.4, 0 ≤ z ≤ 0.2, 0<b ≤ 0.2, 1.8 ≤ c ≤ 2.2, x + y + z + b = 1, M is one or two of Mn and Al, R includes one or more of Na, Sb, C, K, Ca, Zr, Sr, Al, B, Ba, Nb, W, Mo, Co, P, and C, and R must contain Zr. Optionally, a molar amount of Zr in R per mole of the first lithium-nickel transition metal oxide or the second lithium-nickel transition metal oxide is less than or equal to 0.15. A Ni element content in the first lithium-nickel transition metal oxide is 0.5 ≤ x ≤ 0.98, and the Ni element content in the second lithium-nickel transition metal oxide is 0.6 ≤ x ≤ 0.98. The positive active material and the electrolyte solution are mechanically separated by the cladding layer, reducing the occurrence of interface side reactions, and reducing the material cracking of the positive active material in the cyclic charging and discharging process, improving the cycle performance.

In any embodiment of the first aspect, the above cladding layer includes one oxide cladding layer or two oxide cladding layers, and/or an inner layer of the two oxide cladding layers is an island-shaped oxide cladding layer, and an outer layer of the two oxide cladding layers is a layered oxide cladding layer Interface performance is a key indicator for improving the performance of the positive electrode material. By adopting different forms of coating structures, the capacity may be increased while reducing side effects with the electrolyte solution, achieving a win-win goal.

In any embodiment of the first aspect, a thickness of the above cladding layer is 0.1 nm-200 nm, optionally 0.1 nm-100 nm, and further optionally 0.1 nm-50 nm, thereby avoiding obvious hindrance to ion diffusion caused by the excessive thickness of the cladding layer
In any embodiment of the first aspect, an element of the oxide cladding layer includes one or more of a group consisting of Zr, Al, P, B, Ti, W, Co, Nb, Mo, and Mg. The oxide cladding layer having the above elements improves the interface stability of the positive active material/electrolyte solution, and further enhances the cyclicity and safety.

In any embodiment of the first aspect, a weight ratio of the first lithium-nickel transition metal oxide in the above positive active material is 10%-95%, and optionally 50%-90%. By adjusting the weight ratio of the first lithium-nickel transition metal oxide, the overall structural stability and energy density of the positive active material are adjusted.

A second aspect of this application provides a positive electrode plate including a current collector and a positive film layer, where the positive film layer includes a positive active material, and the positive active material is any one of the above positive active materials. The positive active material of this application has a good structure and good interface stability, so the positive electrode-electrolyte solution interface effect is low, which reduces the cracking of the positive active material, and meanwhile, reduces the side reaction between the positive electrode and the electrolyte solution, and reduces the formation of interface micro-cracks, thereby improving the energy density and lifespan of the positive electrode plate.

A third aspect of this application provides a secondary battery including a positive electrode plate, a negative electrode plate, a separator, and an electrolyte solution, where the positive electrode plate is the above positive electrode plate. The secondary battery of this application has the advantages of a high energy density and high cycle performance.

A fourth aspect of this application provides an electrical device including a secondary battery, where the secondary battery is selected from the above secondary batteries. The electrical device of this application operates more stably and safely at high temperature.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a scanning electron micrograph of a first lithium-nickel transition metal oxide particle according to Embodiment 1.
FIG. 2 is a scanning electron micrograph of a second lithium-nickel transition metal oxide particle according to Embodiment 1.
FIG. 3 is a schematic diagram of a secondary battery according to an embodiment of this application.
FIG. 4 is an exploded view of a secondary battery shown in FIG. 3 according to an embodiment of this application.
FIG. 5 is a schematic diagram of a battery module according to an embodiment of this application;
FIG. 6 is a schematic diagram of a battery pack according to an embodiment of this application.
FIG. 7 is an exploded view of the battery pack shown in FIG. 6 according to an embodiment of this application.
FIG. 8 is a schematic diagram of an electrical device that uses a secondary battery as a power supply according to an embodiment of this application.

The drawings are not drawn to actual scale.

### List of reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

Implementations of this application are described in further detail below in conjuncture with the accompanying drawings and embodiments. The detailed description of the following embodiments and the accompanying drawings are used for exemplifying the principles of this application, but are not to be used for limiting the scope of this application. That is, this application is not limited to the described embodiments.

Embodiments in which a positive active material, a positive electrode plate, a secondary battery, and an electrical device of this application are specifically disclosed will be described in detail below with due reference to the accompanying drawings. However, unnecessary details may be omitted in some cases. For example, a detailed description of a well-known matter or repeated description of a substantially identical structure may be omitted. That is intended to prevent the following descriptions from becoming unnecessarily lengthy, and to facilitate understanding by a person skilled in the art. In addition, the accompanying drawings and the following description are intended for a person skilled in the art to fully understand this application, but are not intended to limit the subject matter set forth in the claims.

"Range" disclosed in this application is limited in the form of lower limit and upper limit, and the given range is limited by selecting a lower limit and an upper limit, and the selected lower limit and upper limit define the boundary of a special range. The range limited in this way may include end values or not include end values, and may be combined arbitrarily, that is, any lower limit may be combined with any upper limit to form a range. For example, if the range of 60 to 120 and 80 to 110 is listed for a particular parameter, it is understood that the range of 60 to 110 and 80 to 120 is also expected. In addition, if the minimum range value 1 and 2 are listed, and if the maximum range values 3, 4 and 5 are listed, then the following ranges may be all expected: 1 to 3, 1 to 4, 1 to 5, 2 to 3, 2 to 4 and 2 to 5. In this application, unless otherwise specified, the numerical range "a to b" represents the abbreviation of any real number combination between a and b, where a and b are all real numbers. For example, the numerical range "0 to 5" means that all real numbers between "0 to 5" are listed in this application and "0 to 5" is just an abbreviation of these numerical combinations. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps hereof may be performed sequentially or randomly, preferably sequentially. For example, the method includes steps (a) and (b), indicating that the method may include steps (a) and (b) performed sequentially, or may include steps (b) and (a) performed sequentially. For example, the method may further include step (c), indicating that step (c) may be added to the method in any order, for example, the method may include steps (a), (b) and (c), or may include steps (a), (c) and (b), or may include steps (c), (a) and (b), etc.

Unless otherwise expressly specified, "include" and "include" mentioned herein mean open-ended inclusion, or closed-ended inclusion. For example, the terms "include" and "include" may mean inclusion of other items that are not recited, or inclusion of only the items recited.

Unless otherwise expressly specified, the term "or" used herein is inclusive. For example, the phrase "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

### [Secondary battery]

A secondary battery, also known as a rechargeable battery or storage battery, is a battery that is reusable after an active material in the battery is activated by charging the battery that has been discharged.

Generally, the secondary battery includes a positive electrode plate, a negative electrode plate, a separator, and an electrolyte solution. In the charging and discharging process of the battery, active ions (e.g. lithium ions) shuttle back and forth between the positive electrode plate and the negative electrode plate. The separator is disposed between the positive electrode plate and the negative electrode plate, which mainly plays the role of preventing short circuits between the positive and negative electrodes, and at the same time, may allow active ions to pass through. The electrolyte solution mainly plays the role of conducting active ions between the positive electrode plate and the negative electrode plate.

### [Positive active material]

One embodiment of this application provides a positive active material which includes a first lithium-nickel transition metal oxide and a second lithium-nickel transition metal oxide. Both the first lithium-nickel transition metal oxide and the second lithium-nickel transition metal oxide contain zirconium, and a molar content of zirconium element in the first lithium-nickel transition metal oxide is less than a molar content of zirconium element in the second lithium-nickel transition metal oxide, the first lithium-nickel transition metal oxide is of one or more structures of a monocrystalline particle or a quasi-monocrystalline particle, and the second lithium-nickel transition metal oxide is a secondary particle formed by aggregation of a plurality of primary particles.

In the cycle process, ternary positive electrode materials may experience material cracking, especially under high cut-off voltage conditions. When a large number of cracks occur in the materials, the internal resistance of the battery cell and the gas production of the battery cell will increase significantly, accelerating the capacity decay of the battery cell in the cycle process. Additionally, due to the increase in the internal gas production of the battery cell, the expansion force of the battery cell will rise, thus leading to safety accidents of the battery cell. Therefore, reducing the cracking of the positive electrode material in the cycle process is the fundamental reason for solving the above phenomenon.

By doping zirconium element in ternary materials, the structural stability of the materials may be enhanced, and the phenomenon of cyclic cracking may be improved. In addition, the combination of monocrystalline and polycrystalline may not only obtain a higher compaction density, but also improve the serious cracking of poly-crystals in the materials under a high voltage and prolong the lifespan of the battery cell.

In the positive active material of this application, the first lithium-nickel transition metal oxide is of one or more structures of a monocrystalline particle or a quasi-monocrystalline particle, and the structures are stable, strong, and not easily cracked in the cycle process, especially with better cycle performance at high temperature; the second lithium-nickel transition metal oxide is a secondary particle formed by the aggregation of the plurality of primary particles, and lithium ions diffuse more easily in this material, so that the discharge specific capacity is larger than that of a monocrystalline or a quasi-monocrystalline structure with an equal particle diameter, and the rate performance is better. Moreover, by doping zirconium element in the first lithium-nickel transition metal oxide and the second lithium-nickel transition metal oxide, the particle strength of the oxides is further improved, and especially by doping more zirconium element in the second lithium-nickel transition metal oxide, the particle strength of the second lithium-nickel transition metal oxide is more effectively improved, cracking of the secondary particle is effectively reduced, and the difference in strength between the two oxides is reduced, so that the cycle life of the battery cell is better improved in cooperation with the first lithium-nickel transition metal oxide; and at the same time, the use of zirconium element may increase the charging and discharging depth of the positive active material and increase the mass energy density.

### Explanation of nouns:

Monocrystalline particle: it refers to a complete particle that is not an aggregate of primary particles. Generally, in this application, the size of the monocrystalline particle is micron-sized.

Quasi-monocrystalline particle: it refers to a particle formed by aggregation of 2 to 10 monocrystalline particles. The number of monocrystalline particles is small and the size is between several hundred nanometers and 2 µm to 5 µm.

Secondary particle: it is an aggregate formed by aggregation of a plurality of primary particles. The "plurality of" herein generally refers to 10 or more.

In some embodiments, the zirconium content ratio of the above first lithium-nickel transition metal oxide to the second lithium-nickel transition metal oxide is d, and 0.5 ≤ d < 1, optionally 0.7 < d < 1, and further optionally 0.8 ≤ d ≤ 0.9. By controlling the doping amount of zirconium, the comprehensive performance of strength and rate performance of the two can be improved. The above d may be any point value in a range constituted by any two points of 0.51, 0.55, 0.6, 0.65, 0.7, 0.75, 0.8, 0.85, 0.9, or 0.98.

In the lithium-nickel transition metal oxides, doping zirconium element can effectively increase the particle strength of the material. However, increasing the doping amount of zirconium element will significantly reduce the capacity of the positive electrode material. Therefore, the relationship between the capacity of the positive electrode material and the particle strength is balanced by optimizing the amount of zirconium element.

The doping amount of zirconium element in the above mixture can be measured by inductively coupled plasma emission spectrometry, and the ratio of zirconium element in the first lithium-nickel transition metal oxide and the second lithium-nickel transition metal oxide is determined by respectively measuring the ratio of zirconium element in the two lithium-nickel transition metal oxides.

In some embodiments, the particle strength of the above first lithium-nickel transition metal oxide is greater than the particle strength of the second lithium-nickel transition metal oxide. Optionally, the particle strength of the first lithium-nickel transition metal oxide is 30 MPa to 300 MPa. For example, it may be any point value in a range constituted by any two points of 30 MPa, 50 MPa, 80 MPa, 100 MPa, 110 MPa, 120 MPa, 150 MPa, 200 MPa, 230 MPa, 250 MPa, or 300 MPa, and may be further optionally 110 MPa-230 MPa. The particle strength of the second lithium-nickel transition metal oxide is 20 MPa to 250 MPa. For example, it is any point value in a range constituted by any two points of 20 MPa, 50 MPa, 70 MPa, 90 MPa, 120 MPa, 150 MPa, 180 MPa, 200 MPa, 210 MPa, or 250 MPa, and further optionally 90 MPa to 210 MPa. By further controlling the particle strength of the two oxides, the respective particle strength is improved, thus further reducing the formation of interface cracks in the positive active material in the cycle process, improving cycle stability, and prolonging the lifespan of the positive active material.

In some embodiments, the difference between the particle strength of the above first lithium-nickel transition metal oxide and the particle strength of the second lithium-nickel transition metal oxide is between 10 MPa and 50 MPa, and further optionally between 20 MPa and 30 MPa. The strength matching of the two particles is improved, excessive extrusion stress between the two particles is avoided due to the excessive strength difference between the two particles, and thus the cracking of the two particles caused by extrusion is effectively controlled.

The above particle strength can be measured by a dynamic ultra-micro hardness tester (Shimadzu DUH-211S). The particle strength of the material is tested using a 115° triangular cone probe and under a pressure of 0 mN to 20 mN, and the force value and pressure when the material is broken are recorded.

In some embodiments, the number of the monocrystalline particles contained in the quasi-monocrystalline particle of the above first lithium-nickel transition metal oxide in an SEM image is ≤ 5/µm², e.g. 1, 2, 3, 4, or 5. In some embodiments, the number of the primary particles contained in the secondary particle of the above second lithium-nickel transition metal oxide in an SEM image is 3/µm²-30/µm², e.g. 3, 5, 8, 10, 12, 15, 20, 25, or 30. Monocrystalline particles are usually prone to aggregation due to high sintering temperature and a small particle diameter, forming quasi-monocrystalline particles. When there are many quasi-monocrystalline particles, anisotropic shrinkage and expansion occur in the cycle process, which causes cracking due to stress and reduces the cycle stability of the monocrystalline particles; and in addition, the number of primary particles in the polycrystalline secondary particle is too large, which makes the material more active and has a high risk of cracking in the cycle process. The above parameters are used to limit the number of particles of the material and reduce the volume changes during the cycle of the positive active material, which may effectively improve the cycle stability of the battery cell.

The number of monocrystalline particles and the number of primary particles contained in the secondary particle in the above SEM image were both detected in an SEM diagram with a magnification of 30,000 times. Of course, because of instrumental differences, it is also feasible if the above test results may be obtained at lower or higher magnifications.

In some embodiments, a volume particle diameter distribution curve of the positive active material is a bimodal curve, a low peak particle diameter of the bimodal curve is a first peak particle diameter, a high peak particle diameter is a second peak particle diameter, and the first peak particle diameter is 2 µm to 6 µm, and/or the second peak particle diameter is 6 µm to 15 µm.

There are two particles with different particle diameter distributions in the positive active material, so particles with the small diameter may be filled in particle gaps between particles with the large particle diameter. Through this particle gradation optimization, the voltage window and compaction density of the material may be effectively improved. A high voltage window and compaction density are beneficial to achieving a high volumetric energy density and mass density, thereby significantly improving the endurance of the secondary battery.

In some embodiments, peak separation fitting is performed on the bimodal curve to obtain a small particle fitted peak pattern and a large particle fitted peak pattern, and a particle diameter concentration degree S1 obtained according to the small particle fitted peak pattern and a particle diameter concentration degree S2 obtained according to the large particle fitted peak pattern are each independently 0.1-5, and optionally, the S1 and the S2 are each independently 0.1-3, where S1 = (Dv₁90 -Dv₁10)/ Dv₁50, S2 = (Dv₂90 -Dv₂10)/ Dv₂50, Dv₁N is a particle diameter corresponding to a cumulative volume distribution percentage reaching N% in the small particle fitted peak pattern, Dv₂N is a particle diameter corresponding to a cumulative volume distribution percentage reaching N% in the large particle fitted peak pattern, and N is 10, 50 or 90. The above D_{V}N is measured using a laser particle diameter analyzer. The particle diameter of the positive active material is graded in the above manner, and the interparticle filling property is improved, thereby further improving the compaction density of the positive electrode material.

In some embodiments, a volume particle diameter distribution of the first lithium-nickel transition metal oxide satisfies a small particle fitted peak pattern; and a volume particle diameter distribution of the second lithium-nickel transition metal oxide satisfies the large particle fitted peak pattern. The first lithium-nickel transition metal oxide and the second lithium-nickel transition metal oxide simultaneously realize a better matching relationship in two aspects of composition and particle diameter, which further enhances the compaction density and improves the cyclic cracking defect.

The first lithium-nickel transition metal oxide and the second lithium-nickel transition metal oxide of this application may be high-nickel or low-nickel lithium-nickel transition metal oxides commonly used in the art for positive electrode materials. In some embodiments, chemical formulas of the above first lithium-nickel transition metal oxide and the second lithium-nickel transition metal oxide are each independently LiₐNiₓCo_{y}M_{z}R_{b}O_{c}, where 0.9 ≤ a ≤ 1.2, 0.3 ≤ x ≤ 1, 0 ≤ y ≤ 0.4, 0 < z ≤ 0.2, 0 < b ≤ 0.2, 1.8 ≤ c ≤ 2.2, x + y + z + b = 1, M is one or two of Mn and Al, R includes one or more of Na, Sb, C, K, Ca, Zr, Sr, Al, B, Ba, Nb, W, Mo, Co, P, and C, and R must contain Zr. Optionally, a molar amount of Zr in R per mole of the first lithium-nickel transition metal oxide or the second lithium-nickel transition metal oxide is less than or equal to 0.15; and further optionally, the molar amount of Zr in R per mole of the first lithium-nickel transition metal oxide or the second lithium-nickel transition metal oxide is less than or equal to 0.11. Optionally, a Ni element content in the first lithium-nickel transition metal oxide is 0.5 ≤ x ≤ 0.98, and a Ni element content in the second lithium-nickel transition metal oxide is 0.6 ≤ x ≤ 0.98. The high-nickel or low-and-medium-nickel lithium-nickel transition metal oxide may further improve the power performance of the oxide or enhance the structural stability of the oxide by further doping M and R elements. Moreover, Zr exists in the first lithium-nickel transition metal oxide and the second lithium-nickel transition metal oxide in a doped manner, which may obviously improve the structural stability of the material.

In some embodiments, the chemical formulas of the above first lithium-nickel transition metal oxide and the second lithium-nickel transition metal oxide are each independently LiₐNiₓCo_{y}M_{z}R_{b}O_{c}, where 0.9 ≤ a ≤ 1.0, 0.5 ≤ x ≤ 0.8, 0.1 ≤ y ≤ 0.2, 0.05 ≤ z ≤ 0.2, 0.001 < b ≤ 0.2, 1.8 ≤ c ≤ 2.2, and x + y + z + b = 1.

To further reduce interface side reactions, in some embodiments, the above first lithium-nickel transition metal oxide and the second lithium-nickel transition metal oxide each independently include a core and a cladding layer covering the core, and a chemical formula of the core is each independentlyLiₐNiₓCo_{y}M_{z}R_{b}O, where 0.9 ≤ a ≤ 1.2, 0.3 ≤ x ≤ 1, 0 ≤ y ≤ 0.4, 0 ≤ z ≤ 0.2, 0 < b ≤ 0.2, 1.8 ≤ c ≤ 2.2, x + y + z + b = 1, M is one or two of Mn and Al, R includes one or more of Na, Sb, C, K, Ca, Zr, Sr, Al, B, Ba, Nb, W, Mo, Co, P, and C, and R must contain Zr. Optionally, a molar amount of Zr in R per mole of the first lithium-nickel transition metal oxide or the second lithium-nickel transition metal oxide is less than or equal to 0.15. Optionally, a Ni element content in the first lithium-nickel transition metal oxide is 0.5 ≤ x ≤ 0.98, and the Ni element content in the second lithium-nickel transition metal oxide is 0.6 ≤ x ≤ 0.98. The positive active material and the electrolyte solution are mechanically separated by the cladding layer, reducing the occurrence of interface side reactions, and reducing the material cracking of the positive active material in the cyclic charging and discharging process, improving the cycle performance.

In some embodiments, the above cladding layer includes one oxide cladding layer or two oxide cladding layers; and further optionally, an inner layer of the two oxide cladding layers is an island-shaped oxide cladding layer, and an outer layer of the two oxide cladding layers is a layered oxide cladding layer.

### Description of terms:

Island-shaped oxide cladding layer: a cladding layer formed by the oxide in discrete island-shaped morphology;
Layered oxide cladding layer: a cladding layer formed by the oxide in continuous layered morphology. The layered shape may be a layered structure with a uniform thickness or a layered structure with a non-uniform thickness. As long as it is a continuous oxide film layer, it is a layered oxide cladding layer.

The island-shaped oxide cladding layer may avoid the problem of decreased material conductivity caused by thick layered coating. Further setting a layered oxide cladding layer outside the island-shaped oxide cladding layer is more effective in improving the cycle performance of the material. By adopting different forms of coating structures, the capacity may be increased while reducing side effects with the electrolyte solution, achieving a win-win goal.

In some embodiments, a thickness of the cladding layer is controlled to be 0.1 nm to 200 nm, optionally 0.1 nm to 100 nm, and further optionally 0.1 nm to 50 nm, thereby avoiding obvious hindrance to ion diffusion caused by the excessive thickness of the cladding layer and thus a decrease in ionic conductivity, where the thickness of the cladding layer is measured using a transmission electron microscope.

In some embodiments, an element of the oxide cladding layer includes one or more of Zr, Al, P, B, Ti, W, Co, Nb, Mo, and Mg. The oxide cladding layer having the above elements improves the interface stability of the positive active material/electrolyte solution, and further enhances the cyclicity and safety.

In some embodiments, by adjusting a weight ratio of the first lithium-nickel transition metal oxide, the overall structural stability and energy density of the positive active material are adjusted, and the weight content of the first lithium-nickel transition metal oxide in the above positive active material is 10% to 90%. In order to improve the compaction density and cycle performance of the material, the weight ratio of the first lithium-nickel transition metal oxide in the positive active material is optionally 50% to 90%.

When measuring the composition of the positive active material in reverse, the following method may be referred to:
If the Ni/Co/Mn components of the first lithium-nickel transition metal oxide and the second lithium-nickel transition metal oxide are different, the total proportion of Ni, Co and Mn in the positive active material in the positive electrode plate may be tested by Inductive Coupled Plasma Emission Spectrometer (ICP) first, and then the respective proportions of Ni, Co and Mn of the two morphological particles are tested by combining Energy Dispersive X-Ray Spectroscopy (EDX) separately. Based on the above detection results of ICP and EDX, it is assumed that the mass ratio of the first material is x and the other one is (1-x), and the respective mass ratios of the two materials may be obtained by putting them into the equation.

If the Ni/Co/Mn components of the first lithium-nickel transition metal oxide and the second lithium-nickel transition metal oxide are the same, the positive active material is sieved through screens with different meshes to obtain active materials with different particle diameters respectively, and the proportions and contents of the first lithium-nickel transition metal oxide and the second lithium-nickel transition metal oxide materials are determined according to the ICP measured data.

The positive active material of this application may be prepared by referring to conventional methods after formulation according to the composition of this application. In some embodiments, the following steps can be adopted for preparation: mixing lithium hydroxide or lithium carbonate, nickel cobalt M precursor material
NiₓCo_{y}M_{1-x-y}(OH)₂, and N additive, sintering under the presence of oxygen, controlling the sintering conditions to obtain the first lithium-nickel transition metal oxide and the second lithium-nickel transition metal oxide respectively, and mixing the first lithium-nickel transition metal oxide and the second lithium-nickel transition metal oxide according to a preset mass ratio to prepare the positive active material.

When the first lithium-nickel transition metal oxide and/or the second lithium-nickel transition metal oxide of the positive active material has a cladding layer, lithium-nickel transition metal oxide island-shaped coating and layered coating are achieved by controlling coating elements and coating temperature. For example, aluminum element usually forms an island-shaped coating on the surface at 300 °C to 400 °C, while boron element is more likely to form a layered coating on the surface. For specific coating means, reference may be made to the prior art, and this application will not make a repeated description.

### [Positive electrode plate]

A positive electrode plate generally includes a positive current collector and a positive film layer that overlays at least one surface of the positive current collector. The positive film layer includes a positive active material.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be metal foil or a composite current collector. For example, as the metal foil, aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), etc.).

In some embodiments, the positive active material is any one of the positive active materials provided in this application. The positive active material of this application has a good structure and good interface stability, so the positive electrode-electrolyte solution interface effect is low, which reduces the cracking of the positive active material, and meanwhile, reduces the side reaction between the positive electrode and the electrolyte solution, and reduces the formation of interface micro-cracks, thereby improving the energy density and lifespan of the positive electrode plate.

In some embodiments, the positive film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

In some embodiments, the positive film layer further optionally includes a conductive agent. As an example, the conductive agent may include at least one of superconductive carbon, acetylene black, carbon black, Ketjen black, a carbon dot, a carbon nanotube, graphene, and a carbon nanofiber.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, as the metal foil, copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), etc.).

In some embodiments, the negative active material may be a negative active material known for use in batteries in the art. As an example, the negative active material may include at least one of the following materials: artificial graphite, natural graphite, soft carbon, hard carbon, a silicon-based material, a tin-based material, lithium titanate, etc. The silicon-based material includes at least one of elemental silicon, a silicon oxide compound, a silicon carbon composite, a silicon nitrogen composite, and a silicon alloy. The tin-based material includes at least one of elemental tin, a tin oxide compound, and a tin alloy. However, this application is not limited to these materials, and other traditional materials that can be used as negative electrode active materials for batteries can also be used. Of such negative active materials, one may be used alone, or at least two may be used in combination.

In some embodiments, the negative film layer further optionally includes a binder. As an example, the binder includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative film layer further optionally includes a conductive agent. As an example, the conductive agent includes at least one of superconductive carbon, acetylene black, carbon black, Ketjen black, a carbon dot, a carbon nanotube, graphene, and a carbon nanofiber.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### [Electrolyte]

The electrolyte plays the role of conducting ions between the positive electrode plate and the negative electrode plate. This application has no specific limitation on the type of electrolyte, which can be selected according to needs. For example, the electrolyte may be liquid, gel or all-solid.

In some embodiments, the electrolyte is in a liquid state and includes an electrolyte salt and a solvent.

In some embodiments, the electrolyte salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethylene propylene carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive and a positive electrode film-forming additive. The additive may further include an additive capable of improving certain performance of the battery, for example, an additive for improving overcharge performance of the battery, or an additive for improving high-temperature or low-temperature performance of the battery, etc.

### [Separator]

In some embodiments, the secondary battery further includes a separator. This application has no particular limitation on the type of separator, and any known porous separator with good chemical stability and mechanical stability may be selected.

In some embodiments, the material of the separator includes at least one of glass fiber, non-woven fabric, polyethylene, polypropylene and polyvinylidene difluoride. The separator may be a single-layer film or a multi-layer composite film, without particular limitation. When the separator is a multi-layer composite film, the materials of each layer may be the same or different, without particular limitation.

In some embodiments, the positive electrode plate, the negative electrode plate, and the separator may be made into an electrode assembly by winding or stacking.

In some embodiments, the secondary battery may include an outer packaging. The outer packaging may be used to package the electrode assembly and the electrolyte.

In some embodiments, the outer package of the secondary battery may be a hard housing, such as a hard plastic housing, an aluminum housing, a steel shell, etc. The outer package of the secondary battery may also be a soft package, such as a bag-type soft package. The material of the soft package may be plastic, and examples of the plastic include polypropylene, polybutylene terephthalate and polybutylene succinate.

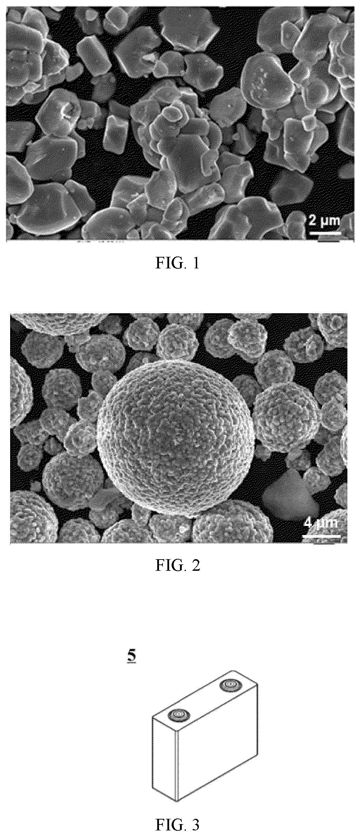

This application has no particular limitation on the shape of the secondary battery, which may be cylindrical, prismatic or any other shape. For example, FIG. 3 shows a secondary battery 5 of a prismatic structure as an example.

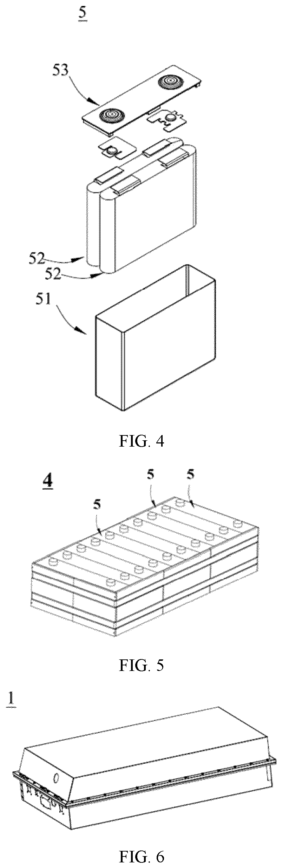

In some embodiments, referring to FIG. 4, the outer package may include a housing 51 and a cover plate 53, where the housing 51 may include a bottom plate and a side plate connected to the bottom plate, and the bottom plate and the side plate enclose an accommodation cavity. The housing 51 has an opening communicating to the accommodation cavity, and the cover plate 53 can cover the opening to close the accommodation cavity. The positive electrode plate, the negative electrode plate and the separator can form an electrode assembly 52 through a winding process or a lamination process. The electrode assembly 52 is packaged in the accommodation cavity. The electrolyte solution is infiltrated in the electrode assembly 52. The number of electrode assemblies 52 contained in the secondary battery 5 may be one or more, and a person skilled in the art can select according to specific actual needs.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 5 shows a battery module 4 as an example. Referring to FIG. 5, in the battery module 4, a plurality of secondary batteries 5 may be arranged in sequence along the length direction of the battery module 4. Of course, they may also be arranged in any other manner. Further, the plurality of secondary batteries 5 may be fixed by fasteners.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

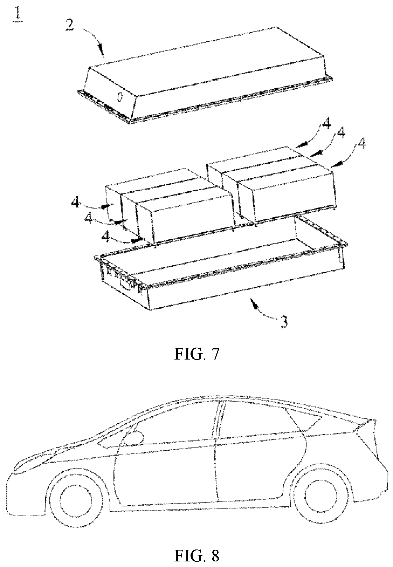

FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box 2 and a lower box 3, and the upper box 2 can cover the lower box 3 and form a closed space for accommodating the battery modules 4. The plurality of battery modules 4 may be arranged in the battery box in any manner.

In addition, this application further provides an electrical device, which includes at least one of the secondary battery, battery module or battery pack provided in this application. The secondary battery, battery module or battery pack may be used as a power source for the electrical device, and may also be used as an energy storage unit for the electrical device. The electrical device may include a mobile device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc., but is not limited to these.

As the electrical device, a secondary battery, a battery module or a battery pack can be selected according to the use requirements thereof.

FIG. 8 is an electrical device as an example. The electrical device is a pure electric vehicle, a hybrid electric vehicle, or a plug-in hybrid electric vehicle, etc. In order to meet the electrical device's requirements for high power and high energy density of secondary batteries, a battery pack or a battery module may be used.

### [Embodiments]

Hereinafter, the embodiments of this application will be described. The embodiments described below are exemplary and are only used to explain this application, and should not be construed as limiting this application. If no specific technique or condition is indicated in the embodiments, the techniques or conditions described in the literature in this field or the product specifications are used. The reagents or instruments used that do not indicate the manufacturer are all conventional products that can be obtained commercially.

### Embodiment 1

### Preparation of positive active material

The ternary precursor (Ni_{0.5}Co_{0.1}Mn_{0.4})OH₂ (particle size Dᵥ50 was about 3.1 µm), LiOH·H₂O and ZrO₂ were mixed in a mixer at a molar ratio of 0.99:1.04:0.01, and then sintered at 920 °C in an oxygen-containing atmosphere to obtain first lithium-nickel transition metal oxide particles. See Table 1 for specific powder parameters. The SEM image is shown in FIG. 1.

The ternary precursor (Ni_{0.5}Co_{0.1}Mn_{0.4})OH₂ (particle size Dᵥ50 was about 9.5 µm), LiOH·H₂O and ZrO₂ were mixed in a mixer at a molar ratio of 0.98:1.04:0.02, and then sintered at 830 °C in an oxygen-containing atmosphere to obtain second lithium-nickel transition metal oxide particles. See Table 1 for specific powder parameters. The SEM image is shown in FIG. 2.

The first lithium-nickel transition metal oxide particles and the second lithium-nickel transition metal oxide particles sequentially prepared were mixed at a mass ratio of 2:8 to prepare the positive active material.

### Preparation of positive electrode plate

The positive active material, polyvinylidene difluoride and conductive carbon black were mixed at a mass ratio of 90:5:5, then added with N-methyl-pyrrolidone (NMP), and stirred at 1000 r/min for 1 h until the mixture was uniformly mixed to obtain a positive electrode slurry. The positive electrode slurry was uniformly coated on one side surface of an aluminum foil current collector with a thickness of 13 microns, and after the coating was completed, dried in a drying oven at 100 °C, cold pressed, and slitted to obtain the positive electrode plate.

### Preparation of electrolyte solution

A mixed solution of ethylene carbonate (EC) and diethyl carbonate (DEC) was mixed at a volume ratio of 1:2 to obtain a mixed solvent. Then sufficiently dried lithium hexafluorophosphate was dissolved in the mixed solvent in a glove box in an argon-containing atmosphere, and uniformly mixed to obtain an electrolyte solution. The concentration of the lithium salt in the electrolyte solution was 1 mol/L.

### Preparation of negative electrode plate

The negative active materials graphite, sodium carboxymethyl cellulose, styrene-butadiene rubber, and acetylene black were mixed in a mass ratio of 96:1:1:2, added with deionized water, and uniformly stirred in a stirrer, and then the slurry was coated on both side surfaces of a copper foil with a thickness of 8 microns, dried in an oven at 100 °C, cold pressed, and slitted to obtain the negative electrode plate.

### Preparation of battery cell

From top to bottom, the positive electrode plate, the separator, and the negative electrode plate were stacked in sequence to ensure that the positive and negative electrode plates cannot contact each other, and then they were wound into a bare cell through a winding needle, loaded into a prismatic aluminum housing, injected with an electrolyte solution, and subjected to the steps of standing, forming, capacity, etc. to prepare the battery cell.

### Embodiment 2

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.992:1.04:0.008, and then sintered at 860 °C in an oxygen-containing atmosphere to obtain first lithium-nickel transition metal oxide particles. See Table 1 for specific powder parameters.

The ternary precursor (Ni_{0.8}Co_{0.1}Mn_{0.1})OH₂ (particle size Dᵥ50 was about 9.6 µm), LiOH·H₂O and ZrO₂ were mixed in a mixer at a molar ratio of 0.99:1.04:0.01, and then sintered at 820 °C in an oxygen-containing atmosphere to obtain second lithium-nickel transition metal oxide particles. See Table 1 for specific powder parameters.

The first lithium-nickel transition metal oxide particles and the second lithium-nickel transition metal oxide particles prepared were mixed at a mass ratio of 3:7 to prepare the positive active material.

The preparation procedure of the secondary battery was the same as that of Embodiment 1, and the positive active material of Embodiment 2 was used as the positive active material.

### Embodiment 3

### Preparation of positive active material

The ternary precursor (Ni_{0.8}Co_{0.1}Al_{0.1})OH₂ (particle size Dᵥ50 was about 3.3 µm), LiOH·H₂O ZrO₂, and Nb₂O₅ were mixed in a mixer at a molar ratio of 0.99:1.04:0.008:0.001, and then sintered at 860 °C in an oxygen-containing atmosphere to obtain first lithium-nickel transition metal oxide particles. See Table 1 for specific powder parameters.

The ternary precursor (Ni_{0.8}Co_{0.1}Al_{0.1})OH₂ (particle size Dᵥ50 was about 9.4 µm), LiOH·H₂O, ZrO₂, and Nb₂O₅ were mixed in a mixer at a molar ratio of 0.99:1.04:0.009:0.0005, and then sintered at 820 °C in an oxygen-containing atmosphere to obtain second lithium-nickel transition metal oxide particles. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 4

### Preparation of positive active material

The ternary precursor (Ni_{0.8}Co_{0.1}Mn_{0.1})OH₂ (particle size Dᵥ50 was about 3.3 µm), LiOH·H₂O and ZrO₂ were mixed in a mixer at a molar ratio of 0.992:1.04:0.008, and then sintered at 860 °C in an oxygen-containing atmosphere. The first lithium-nickel transition metal oxide particles obtained above and aluminum oxide were mixed in a mixer at a molar ratio of 1:0.005, and then sintered at 400 °C in an oxygen-containing atmosphere to obtain a first lithium-nickel transition metal oxide having an Al₂O₃ island-shaped cladding layer with a thickness of 2 nm on its surface. See Table 1 for specific powder parameters.

The ternary precursor (Ni0.8Co_{0.1}Mn_{0.1})OH₂ (particle size Dᵥ50 was about 9.2 µm), LiOH·H₂O and ZrO₂ were mixed in a mixer at a molar ratio of 0.991:1.04:0.009, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 6:4 to prepare the positive active material.

The rest was the same as in Embodiment 1.

### Embodiment 5

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.992:1.04:0.008, and then sintered at 860 °C in an oxygen-containing atmosphere. The first lithium-nickel transition metal oxide particles obtained above and boric acid were mixed in a mixer at a molar ratio of 1:0.01, and then sintered at 400 °C in an oxygen-containing atmosphere to obtain a first lithium-nickel transition metal oxide having a B₂O₃ layered cladding layer with a thickness of 5 nm on its surface. See Table 1 for specific powder parameters.

The ternary precursor (Ni_{0.8}Co_{0.1}Mn_{0.1})OH₂ (particle size Dᵥ50 was about 9.3 µm), LiOH·H₂O and ZrO₂ were mixed in a mixer at a molar ratio of 0.991:1.04:0.009, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 6

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.992:1.04:0.008, and then sintered at 860 °C in an oxygen-containing atmosphere. The first lithium-nickel transition metal oxide particles obtained above, boric acid and aluminum oxide were mixed in a mixer at a molar ratio of 1:0.02:0.005, and then sintered at 400 °C in an oxygen-containing atmosphere to obtain a first lithium-nickel transition metal oxide having a cladding layer with a thickness of 20 nm on its surface, with an Al₂O₃ island-shaped cladding layer inside and a B₂O₃ island-shaped cladding layer outside. See Table 1 for specific powder parameters.

The ternary precursor (Ni_{0.8}Co_{0.1}Mn_{0.1})OH₂ (particle size Dᵥ50 was about 9.9 µm), LiOH·H₂O and ZrO₂ were mixed in a mixer at a molar ratio of 0.991:1.04:0.009, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 7

### Preparation of positive active material

The ternary precursor (Ni_{0.8}Co_{0.1}Mn_{0.1})OH₂ (particle size Dᵥ50 was about 3.8 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.7 µm), LiOH·H₂O and ZrO₂ were mixed in a mixer at a molar ratio of 0.991:1.04:0.009, and then sintered at 820 °C in an oxygen-containing atmosphere to obtain second lithium-nickel transition metal oxide particles. The second lithium-nickel transition metal oxide particles obtained above and aluminum oxide were mixed in a mixer at a molar ratio of 1:0.005, and then sintered at 400 °C in an oxygen-containing atmosphere to obtain a second lithium-nickel transition metal oxide having an Al₂O₃ island-shaped cladding layer with a thickness of 2 nm on its surface. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 8

### Preparation of positive active material

The ternary precursor (Ni_{0.8}Co_{0.1}Mn_{0.1})OH₂ (particle size Dᵥ50 was about 3.3 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.6 µm), LiOH·H₂O and ZrO₂ were mixed in a mixer at a molar ratio of 0.991:1.04:0.009, and then sintered at 820 °C in an oxygen-containing atmosphere to obtain second lithium-nickel transition metal oxide particles. The second lithium-nickel transition metal oxide particles obtained above and boric acid were mixed in a mixer at a molar ratio of 1:0.01, and then sintered at 400 °C in an oxygen-containing atmosphere to obtain a second lithium-nickel transition metal oxide having a B₂O₃ layered cladding layer with a thickness of 5 nm on its surface. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 9

### Preparation of positive active material

The ternary precursor (Ni_{0.8}Co_{0.1}Mn_{0.1})OH₂ (particle size Dᵥ50 was about 3.4 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.991:1.04:0.009, and then sintered at 820 °C in an oxygen-containing atmosphere to obtain second lithium-nickel transition metal oxide particles. The second lithium-nickel transition metal oxide particles obtained above, boric acid and aluminum oxide were mixed in a mixer at a molar ratio of 1:0.02:0.005, and then sintered at 400 °C in an oxygen-containing atmosphere to obtain a second lithium-nickel transition metal oxide having a cladding layer with a thickness of 20 nm on its surface, with an Al₂O₃ island-shaped cladding layer inside and a B₂O₃ island-shaped cladding layer outside. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 10

### Preparation of positive active material

The ternary precursor (Ni_{0.8}Co_{0.1}Mn_{0.1})OH₂ (particle size Dᵥ50 was about 3.6 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.6 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 1:9 to prepare the positive active material.

### Embodiment 11

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.9 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 9:1 to prepare the positive active material.

### Embodiment 12

### Preparation of positive active material

The ternary precursor (Ni_{0.8}Co_{0.1}Mn_{0.1})OH₂ (particle size Dᵥ50 was about 3.5 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.2 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 13

The first lithium-nickel transition metal oxide particles prepared in Embodiment 12 and the second lithium-nickel transition metal oxide particles prepared in Embodiment 12 were mixed at a mass ratio of 0.5:9.5 to prepare the positive active material.

The rest was the same as in Embodiment 1.

### Embodiment 14

The first lithium-nickel transition metal oxide particles prepared in Embodiment 12 and the second lithium-nickel transition metal oxide particles prepared in Embodiment 12 were mixed at a mass ratio of 9.5:0.5 to prepare the positive active material.

The rest was the same as in Embodiment 1.

### Embodiment 15

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.999:1.04:0.001, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.998:1.04:0.002, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 16

### Preparation of positive active material

The ternary precursor (Ni_{0.8}Co_{0.1}Mn_{0.1})OH₂ (particle size Dᵥ50 was about 3.4 µm), LiOH·H₂O and ZrO₂ were mixed in a mixer at a molar ratio of 0.9:1.04:0.1, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.7 µm), LiOH·H₂O and ZrO₂ were mixed in a mixer at a molar ratio of 0.895:1.04:0.105, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 17

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.85:1.04:0.15, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.5 µm), LiOH·H₂O and ZrO₂ were mixed in a mixer at a molar ratio of 0.8:1.04:0.2, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 18

### Preparation of positive active material

The ternary precursor (Ni_{0.8}Co_{0.1}Mn_{0.1})OH₂ (particle size Dᵥ50 was about 1.5 µm), LiOH·H₂O and ZrO₂ were mixed in a mixer at a molar ratio of 0.994:1.04:0.006, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.1 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 19

### Preparation of positive active material

The ternary precursor (Ni_{0.8}Co_{0.1}Mn_{0.1})OH₂ (particle size Dᵥ50 was about 3.9 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 6:4 to prepare the positive active material.

### Embodiment 20

### Preparation of positive active material

The ternary precursor (Ni_{0.8}Co_{0.1}Mn_{0.1})OH₂ (particle size Dᵥ50 was about 3.1 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.3 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 21

### Preparation of positive active material

The ternary precursor (Ni_{0.8}Co_{0.1}Mn_{0.1})OH₂ (particle size Dᵥ50 was about 3.3 µm), LiOH·H₂O and ZrO₂ were mixed in a mixer at a molar ratio of 0.994:1.04:0.006, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.7 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 4:6 to prepare the positive active material.

### Embodiment 22

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.95:1.04:0.05, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 3:7 to prepare the positive active material.

### Embodiment 23

### Preparation of positive active material

The ternary precursor (Ni_{0.8}Co_{0.1}Mn_{0.1})OH₂ (particle size Dᵥ50 was about 3.4 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.3 µm), LiOH·H₂O and ZrO₂ were mixed in a mixer at a molar ratio of 0.98:1.04:0.02, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 24

### Preparation of positive active material

The ternary precursor (Ni_{0.8}Co_{0.1}Mn_{0.1})OH₂ (particle size Dᵥ50 was about 3.5 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.8 µm), LiOH·H₂O and ZrO₂ were mixed in a mixer at a molar ratio of 0.9918:1.04:0.0082, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 5:5 to prepare the positive active material.

### Embodiment 25

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.9 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 26

### Preparation of positive active material

The ternary precursor (Ni_{0.8}Co_{0.1}Mn_{0.1})OH₂ (particle size Dᵥ50 was about 6.4 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.5 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 27

### Preparation of positive active material

The ternary precursor (Ni_{0.8}Co_{0.1}Mn_{0.1})OH₂ (particle size Dᵥ50 was about 3.6 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.6 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 28

### Preparation of positive active material

The ternary precursor (Ni_{0.8}Co_{0.1}Mn_{0.1})OH₂ (particle size Dᵥ50 was about 3.8 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 29

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.8 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 30

### Preparation of positive active material

The ternary precursor (Ni_{0.8}Co_{0.1}Mn_{0.1})OH₂ (particle size Dᵥ50 was about 3.4 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 15.2 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 31

### Preparation of positive active material

The ternary precursor (Ni_{0.8}Co_{0.1}Mn_{0.1})OH₂ (particle size Dᵥ50 was about 3.3 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.5 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 32

### Preparation of positive active material

The ternary precursor (Ni_{0.8}Co_{0.1}Mn_{0.1})OH₂ (particle size Dᵥ50 was about 3.3 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.7 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Embodiment 33

### Preparation of positive active material

The ternary precursor (Ni_{0.8}Co_{0.1}Mn_{0.1})OH₂ (particle size Dᵥ50 was about 3.2 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.9 µm), LiOH·H₂O and ZrO₂ were mixed in a mixer at a molar ratio of 0.99:1.04:0.01, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Comparative Embodiment 1

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.1 µm) and LiOH·H₂O were mixed in a mixer at a molar ratio of 1:1.04, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Comparative Embodiment 2

### Preparation of positive active material

The ternary precursor (Ni_{0.8}Co_{0.1}Mn_{0.1})OH₂ (particle size Dᵥ50 was about 3.7 µm), LiOH·H₂O and ZrO₂ were mixed in a mixer at a molar ratio of 0.992:1.04:0.008, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.4 µm), LiOH·H₂O and ZrO₂ were mixed in a mixer at a molar ratio of 0.992:1.04:0.008, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### Comparative Embodiment 3

### Preparation of positive active material

The ternary precursor (Ni_{0.8}Co_{0.1}Mn_{0.1})OH₂ (particle size Dᵥ50 was about 3.7 µm) and LiOH·H₂O were mixed in a mixer at a molar ratio of 1:1.04, and then sintered at 860 °C in an oxygen-containing atmosphere to obtain a first lithium-nickel transition metal oxide. See Table 1 for specific powder parameters.

The ternary precursor (Ni_{0.8}Co_{0.1}Mn_{0.1})OH₂ (particle size Dᵥ50 was about 9.3 µm) and LiOH·H₂O were mixed in a mixer at a molar ratio of 1:1.04, and then sintered at 820 °C in an oxygen-containing atmosphere to obtain a second lithium-nickel transition metal oxide. See Table 1 for specific powder parameters.

The first lithium-nickel transition metal oxide particles and the second lithium-nickel transition metal oxide particles prepared were mixed at a mass ratio of 7:3 to prepare the positive active material.

### 1. Test of positive active material in positive electrode plate

### 1.1. Composition test of the first lithium-nickel transition metal oxide particle and the second lithium-nickel transition metal oxide particle:

Inductively coupled plasma emission spectroscopy was adopted.

### 1.2. Particle diameter size test:

### Particle diameter test:

### Tests of particle diameter size types: Dv10, Dv50 and Dv90.

Equipment model: Malvern 2000 (MasterSizer 2000) laser particle size analyzer, reference standard process: GB/T19077-2016/ISO 13320:2009, detailed test process: an appropriate amount of the sample to be tested (the sample concentration was guaranteed to have a 8% to 12% shading degree) was taken, added with 20 mL anhydrous ethanol, and subjected to ultrasonic treatment for 5 min (53 KHz/120 W) to ensure the complete dispersion of the sample, and then the sample was measured according to the GB/T19077-2016/ISO 13320:2009 standard. In order to avoid the aggregation in the drying process affecting the particle size test, the washed and wet sample was taken for the dispersion test.

The first lithium-nickel transition metal oxide and the second lithium-nickel transition metal oxide were tested respectively by the above process to obtain the respective volume particle diameter distribution curves; and the positive film layer of the positive electrode plate was scraped and tested by the above process, and the volume particle diameter distribution curve obtained was a bimodal curve. The bimodal curve was fitted by peak separation using origin to obtain a small particle fitted peak pattern and a large particle fitted peak pattern. After comparison, the small particle fitted peak pattern basically coincided with the volume particle diameter distribution curve of the first lithium-nickel transition metal oxide, and the large particle fitted peak pattern basically coincided with the volume particle diameter distribution curve of the second lithium-nickel transition metal oxide, indicating that the result of peak separation fitting was reliable. D_{V}10, D_{V}50 and D_{V}90 recorded in or used in Table 1 were obtained from the volume particle diameter distribution curves of the first lithium-nickel transition metal oxide and the second lithium-nickel transition metal oxide.

### 1.3. Particle strength:

The particle strength was characterized by a dynamic ultra-micro hardness tester. The particle strength of the material was tested with a 50 micron probe under pressure of 0 mN to 20 mN, and the force value and pressure when the material was broken were recorded.

### 1.4. Test of the number of monocrystallines of the first lithium-nickel transition metal oxide:

The first lithium-nickel transition metal oxide powder was tested by an electron microscope. The number of particles per square micron was recorded in ten different regions at 30,000 magnification, and the average value of the ten regions was taken as the number of monocrystallines per square micron.

### 1.5. Test of primary particles of the second lithium-nickel transition metal oxide:

The number of the second lithium-nickel transition metal oxide was tested by an electron microscope. The number of particles per square micron was recorded in ten different regions at 30,000 magnification, and the average value of the ten regions was taken as the number of primary particles per square micron.

### 1.6. Thickness of the oxide layer (according to TEM):

The material was analyzed by TEM. The thickness of the cladding layer of the material was measured at ten points, and the average value was taken.

The test results are recorded in Table 1.

**Table 1 (To be continued)**

| | Positive electrode material composition | First lithium-nickel transition metal oxide | | | |
|---|---|---|---|---|---|
| | First lithium-nickel transition metal oxide (upper) | Particle strength (MPa) | Monocrystal line number (per µm²) | Dᵥ50 (µm) | S = (Dᵥ90 Dᵥ10)/Dᵥ 50 |
| | Second lithium-nickel transition metal oxide (lower) | | | | |
| Embodiment 1 | Li(Ni_{0.5}Co_{0.1}Mn_{0.4})_{0.99}Zr_{0.01}O₂ | 121.2 | 3 | 3.1 | 1.42 |
| | Li(Ni_{0.5}Co_{0.1}Mn_{0.4})_{0.98}Zr_{0.02}O₂ | | | | |
| Embodiment 2 | Li(Ni_{0.8}Co_{0.1}Mn_{0.1})_{0.992}Zr_{0.008}O₂ | 114.5 | 3 | 3.2 | 1.41 |
| | Li(Ni_{0.8}Co_{0.1}Mn_{0.1})_{0.99}Zr_{0.01}O₂ | | | | |
| Embodiment 3 | Li(Ni_{0.8}Co_{0.1}Al_{0.1})_{0.99}Zr_{0.008}Nb_{0.002}O₂ | 115.3 | 4 | 3.3 | 1.43 |
| | Li(Ni_{0.8}Co_{0.1}Al_{0.1})_{0.99}Zr_{0.009}Nb_{0.001}O₂ | | | | |
| Embodiment 4 | Li(Ni_{0.8}Co_{0.1}Mn_{0.1})_{0.992}Zr_{0.008}O₂ | 115.2 | 4 | 3.3 | 1.44 |
| | Li(Ni_{0.8}Co_{0.1}Mn_{0.1})_{0.991}Zr_{0.009}O₂ | | | | |
| Embodiment 5 | Li(Ni_{0.8}Co_{0.1}Mn_{0.1})_{0.992}Zr_{0.008}O₂ | 115.1 | 4 | 3.2 | 1.45 |
| | Li(Ni_{0.8}Co_{0.1}Mn_{0.1})_{0.991}Zr_{0.009}O₂ | | | | |
| Embodiment 6 | Li(Ni_{0.8}Co_{0.1}Mn_{0.1})_{0.992}Zr_{0.008}O₂ | 115.6 | 4 | 3.7 | 1.46 |
| | Li(Ni_{0.8}Co_{0.1}Mn_{0.1})_{0.991}Zr_{0.009}O₂ | | | | |
| Embodiment 7 | Li(Ni_{0.8}Co_{0.1}Mn_{0.1})_{0.992}Zr_{0.008}O₂ | 114.5 | 3 | 3.8 | 1.43 |
| | Li(Ni_{0.8}Co_{0.1}Mn_{0.1})_{0.991}Zr_{0.009}O₂ | | | | |
| Embodiment 8 | Li(Ni_{0.8}Co_{0.1}Mn_{0.1})_{0.992}Zr_{0.008}O₂ | 114.7 | 3 | 3.3 | 1.47 |
| | Li(Ni_{0.8}Co_{0.1}Mn_{0.1})_{0.991}Zr_{0.009}O₂ | | | | |
| Embodiment 9 | Li(Ni_{0.8}Co_{0.1}Mn_{0.1})_{0.992}Zr_{0.008}O₂ | 114.6 | 3 | 3.4 | 1.48 |
| | Li(Ni_{0.8}Co_{0.1}Mn_{0.1})_{0.991}Zr_{0.009}O₂ | | | | |
| Embodiment 10 | Li(Ni_{0.8}Co_{0.1}Mn_{0.1})_{0.992}Zr_{0.008}O₂ | 115.1 | 3 | 3.6 | 1.42 |
| | Li(Ni_{0.8}Co_{0.1}Mn_{0.1})_{0.99}Zr_{0.01}O₂ | | | | |
| Embodiment 11 | Li(Ni_{0.8}Co_{0.1}Mn_{0.1})_{0.992}Zr_{0.008}O₂ | 115.2 | 3 | 3.7 | 1.41 |
| | Li(Ni_{0.8}Co_{0.1}Mn_{0.1})_{0.99}Zr_{0.01}O₂ | | | | |
| Embodiment 12 | Li(Ni_{0.8}Co_{0.1}Mn_{0.1})_{0.992}Zr_{0.008}O₂ | 115.4 | 3 | 3.5 | 1.43 |
| | Li(Ni_{0.8}Co_{0.1}Mn_{0.1})_{0.99}Zr_{0.01}O₂ | | | | |
| Embodiment 13 | Li(Ni_{0.8}Co_{0.1}Mn_{0.1})_{0.992}Zr_{0.008}O₂ | 115.4 | 3 | 3.5 | 1.43 |
| | Li(Ni_{0.8}Co_{0.1}Mn_{0.1})_{0.99}Zr_{0.01}O₂ | | | | |
| Embodiment 14 | Li(Ni_{0.8}Co_{0.1}Mn_{0.1})_{0.992}Zr_{0.008}O₂ | 115.4 | 3 | 3.5 | 1.43 |
| | Li(Ni_{0.8}Co_{0.1}Mn_{0.1})_{0.99}Zr_{0.01}O₂ | | | | |
| Embodiment 15 | Li(Ni_{0.8}Co_{0.1}Mn_{0.1})_{0.999}Zr_{0.001}O₂ | 50.2 | 3 | 3.7 | 1.44 |
| | Li(Ni_{0.8}Co_{0.1}Mn_{0.1})_{0.998}Zr_{0.002}O₂ | | | | |
| Embodiment 16 | Li(Ni_{0.6}Co_{0.1}Mn_{0.3})_{0.9}Zr_{0.1}O₂ | 220.4 | 3 | 3.4 | 1.47 |
| | Li(Ni_{0.6}Co_{0.1}Mn_{0.3})_{0.895}Zr_{0.105}O₂ | | | | |
| Embodiment 17 | Li(Ni_{0.5}Co_{0.2}Mn_{0.3})_{0.85}Zr_{0.15}O₂ | 300.3 | 3 | 3.2 | 1.48 |
| | Li(Ni_{0.5}Co_{0.2}Mn_{0.3})_{0.8}Zr_{0.2}O₂ | | | | |
| Embodiment 18 | Li(Ni_{0.8}Co_{0.1}Mn_{0.1})_{0.992}Zr_{0.008}O₂ | 115.4 | 7 | 1.5 | 1.53 |
| | Li(Ni_{0.8}Co_{0.1}Mn_{0.1})_{0.99}Zr_{0.01}O₂ | | | | |
| Embodiment 19 | Li(Ni_{0.8}Co_{0.1}Mn_{0.1})_{0.992}Zr_{0.008}O₂ | 115.2 | 3 | 3.9 | 1.51 |
| | Li(Ni_{0.8}Co_{0.1}Mn_{0.1})_{0.99}Zr_{0.01}O₂ | | | | |
| Embodiment 20 | Li(Ni_{0.8}Co_{0.1}Mn_{0.1})_{0.992}Zr_{0.008}O₂ | 115.4 | 3 | 3.1 | 1.52 |
| | Li(Ni_{0.8}Co_{0.1}Mn_{0.1})_{0.99}Zr_{0.01}O₂ | | | | |
| Embodiment 21 | Li(Ni_{0.8}Co_{0.1}Mn_{0.1})_{0.992}Zr_{0.008}O₂ | 115.7 | 3 | 3.3 | 1.43 |
| | Li(Ni_{0.8}Co_{0.1}Mn_{0.1})_{0.95}Zr_{0.05}O₂ | | | | |
| Embodiment 22 | Li(Ni_{0.8}Co_{0.1}Mn_{0.1})_{0.994}Zr_{0.06}O₂ | 100.8 | 3 | 3.2 | 1.47 |
| | Li(Ni_{0.8}Co_{0.1}Mn_{0.1})_{0.99}Zr_{0.01}O₂ | | | | |
| Embodiment 23 | Li(Ni_{0.1}Co_{0.1}Mn_{0.1})_{0.992}Zr_{0.008}O₂ | 115.7 | 3 | 3.4 | 1.48 |
| | Li(Ni_{0.8}Co_{0.1}Mn_{0.1})_{0.98}Zr_{0.02}O₂ | | | | |
| Embodiment 24 | Li(Ni_{0.8}Co_{0.1}Mn_{0.1})_{0.992}Zr_{0.008}O₂ | 115.4 | 3 | 3.5 | 1.43 |
| | Li(Ni_{0.8}Co_{0.1}Mn_{0.1})_{0.9918}Zr_{0.0082}O₂ | | | | |
| Embodiment 25 | Li(Ni_{0.8}Co_{0.1}Mn_{0.1})_{0.992}Zr_{0.008}O₂ | 115.5 | 3 | 3.7 | 1.45 |
| | Li(Ni_{0.8}Co_{0.1}Mn_{0.1})_{0.99}Zr_{0.01}O₂ | | | | |
| Embodiment 26 | Li(Ni_{0.8}Co_{0.1}M_{n0.1})_{0.992}Zr_{0.008}O₂ | 115.3 | 2 | 6.4 | 1.47 |
| | Li(Ni_{0.8}Co_{0.1}Mn_{0.1})_{0.99}Zr_{0.01}O₂ | | | | |
| Embodiment 27 | Li(Ni_{0.8}Co_{0.1}Mn_{0.1})_{0.992}Zr_{0.008}O₂ | 115.4 | 4 | 3.6 | 3.23 |
| | Li(Ni_{0.8}Co_{0.1}Mn_{0.1})_{0.99}Zr_{0.01}O₂ | | | | |
| Embodiment 28 | Li(Ni_{0.8}Co_{0.1}Mn_{0.1})_{0.992}Zr_{0.008}O₂ | 115.2 | 4 | 3.8 | 5.12 |
| | Li(Ni_{0.8}Co_{0.1}Mn_{0.1})_{0.99}Zr_{0.01}O₂ | | | | |
| Embodiment 29 | Li(Ni_{0.8}Co_{0.1}Mn_{0.1})_{0.992}Zr_{0.008}O₂ | 115.1 | 5 | 3.2 | 7.43 |
| | Li(Ni_{0.8}Co_{0.1}Mn_{0.1})_{0.99}Zr_{0.01}O₂ | | | | |
| Embodiment 30 | Li(Ni_{0.8}Co_{0.1}Mn_{0.1})_{0.992}Zr_{0.008}O₂ | 115.2 | 3 | 3.4 | 1.43 |
| | Li(Ni_{0.8}Co_{0.1}Mn_{0.1})_{0.99}Zr_{0.01}O₂ | | | | |
| Embodiment 31 | Li(Ni_{0.8}Co_{0.1}Mn_{0.1})_{0.992}Zr_{0.008}O₂ | 115.3 | 3 | 3.3 | 1.42 |
| | Li(Ni_{0.8}Co_{0.1}Mn_{0.1})_{0.99}Zr_{0.01}O₂ | | | | |
| Embodiment 32 | Li(Ni_{0.8}Co_{0.1}Mn_{0.1})_{0.992}Zr_{0.008}O₂ | 115.5 | 3 | 3.3 | 1.45 |
| | Li(Ni_{0.8}Co_{0.1}Mn_{0.1})_{0.99}Zr_{0.01}O₂ | | | | |
| Embodiment 33 | Li(Ni_{0.8}Co_{0.1}Mn_{0.1})_{0.992}Zr_{0.008}O₂ | 115.6 | 3 | 3.2 | 1.46 |
| | Li(Ni_{0.8}Co_{0.1}Mn_{0.1})_{0.99}Zr_{0.01}O₂ | | | | |
| Comparative Embodiment 1 | Li(Ni_{0.8}Co_{0.1}Mn_{0.1})_{0.992}Zr_{0.008}O₂ | 115.5 | 3 | 3.7 | 1.45 |
| | LiNi_{0.8}Co_{0.1}Mn_{0.1}O₂ | | | | |
| Comparative Embodiment 2 | Li(Ni_{0. 8}Co_{0.1}Mn_{0.1})_{0.992}Zr_{0.008}O₂ | 115.2 | 3 | 3.7 | 1.45 |
| | Li(Ni_{0.8}Co_{0.1}Mn_{0.1})_{0.992}Zr_{0.008}O₂ | | | | |
| Comparative Embodiment 3 | LiNi_{0.8}Co_{0.1}Mn_{0.1}O₂ | 30.2 | 3 | 3.7 | 1.44 |
| | LiNi_{0.8}Co_{0.1}Mn_{0.1}O₂ | | | | |

**Table 1 (Continued)**

| | Second lithium-nickel transition metal oxide | | | | d value | Strength difference (MPa) |
|---|---|---|---|---|---|---|
| | Particle strength (MPa) | Number of primary particles (per µm²) | Dᵥ50 (µm) | S = (Dᵥ90 - Dᵥ10)/Dᵥ50 | | |
| Embodiment 1 | 95.3 | 5 | 9.5 | 1.42 | 0.5 | 25.9 |
| Embodiment 2 | 90.4 | 6 | 9.6 | 1.44 | 0.8 | 24.1 |
| Embodiment 3 | 89.6 | 5 | 9.4 | 1.45 | 0.89 | 25.7 |
| Embodiment 4 | 89.9 | 5 | 9.2 | 1.48 | 0.89 | 25.3 |
| Embodiment 5 | 89.6 | 5 | 9.3 | 1.41 | 0.89 | 25.5 |
| Embodiment 6 | 89.1 | 5 | 9.9 | 1.43 | 0.89 | 26.5 |
| Embodiment 7 | 89.2 | 5 | 9.7 | 1.46 | 0.89 | 25.3 |
| Embodiment 8 | 89.7 | 5 | 9.6 | 1.47 | 0.89 | 25 |
| Embodiment 9 | 89.8 | 5 | 9.4 | 1.49 | 0.89 | 24.8 |
| Embodiment 10 | 90.6 | 6 | 9.6 | 1.42 | 0.8 | 24.5 |
| Embodiment 11 | 90.3 | 6 | 9.9 | 1.44 | 0.8 | 24.9 |
| Embodiment 12 | 90.2 | 6 | 9.2 | 1.45 | 0.8 | 25.2 |
| Embodiment 13 | 90.2 | 6 | 9.2 | 1.45 | 0.8 | 25.2 |
| Embodiment 14 | 90.2 | 6 | 9.2 | 1.45 | 0.8 | 25.2 |
| Embodiment 15 | 50.9 | 6 | 9.4 | 1.4 | 0.5 | -0.7 |
| Embodiment 16 | 210.2 | 6 | 9.7 | 1.41 | 0.95 | 10.2 |
| Embodiment 17 | 250.3 | 6 | 9.5 | 1.43 | 0.75 | 50 |
| Embodiment 18 | 90.5 | 6 | 9.1 | 1.35 | 0.8 | 24.9 |
| Embodiment 19 | 90.6 | 28 | 9.4 | 1.37 | 0.8 | 24.6 |
| Embodiment 20 | 90.7 | 36 | 9.3 | 1.39 | 0.8 | 24.7 |
| Embodiment 21 | 140.6 | 6 | 9.7 | 1.42 | 0.16 | -24.9 |
| Embodiment 22 | 90.3 | 6 | 9.4 | 1.43 | 0.6 | 10.5 |
| Embodiment 23 | 95.6 | 6 | 9.3 | 1.45 | 0.4 | 20.1 |
| Embodiment 24 | 70.7 | 6 | 9.8 | 1.46 | 0.98 | 44.7 |
| Embodiment 25 | 90.5 | 6 | 9.9 | 1.48 | 0.8 | 25 |
| Embodiment 26 | 90.3 | 6 | 9.5 | 1.41 | 0.8 | 25 |
| Embodiment 27 | 90.6 | 6 | 9.6 | 1.43 | 0.8 | 24.8 |
| Embodiment 28 | 90.8 | 6 | 9.4 | 1.44 | 0.8 | 24.4 |
| Embodiment 29 | 90.6 | 6 | 9.8 | 1.4 | 0.8 | 24.5 |
| Embodiment 30 | 90.3 | 6 | 15.2 | 1.44 | 0.8 | 24.9 |
| Embodiment 31 | 90.5 | 6 | 9.5 | 3.4 | 0.8 | 24.8 |
| Embodiment 32 | 90.6 | 6 | 9.7 | 5.5 | 0.8 | 24.9 |
| Embodiment 33 | 90.9 | 6 | 9.9 | 7.7 | 0.8 | 24.7 |
| Comparative Embodiment 1 | 20.5 | 6 | 9.1 | 1.41 | - | 95.01 |
| Comparative Embodiment 2 | 68.5 | 6 | 9.4 | 1.47 | 1 | 46.7 |
| Comparative Embodiment 3 | 20.1 | 6 | 9.3 | 1.44 | - | 10.1 |

### 2. Compaction density of positive electrode plate

The positive electrode slurry was coated on both side surfaces of a 13 µm aluminum foil with a coating thickness of 110 µm on one side, data on the compaction density and elongation rate were collected by a cold press after drying, and the compaction density corresponding to the elongation rate of 0.8% was used as a test value of the compaction density of the electrode plate of the positive active material.

Elongation rate: (length of the electrode plate after cold pressing - length of the electrode plate before cold pressing) / length of the electrode plate before cold pressing × 100%

### 3. Battery cell performance test

### 3.1. Gram capacity (mAh/g)

Gram capacity refers to a ratio of the capacitance that can be released by the active material inside the battery to the mass of the active material.

### 3.2. Cycle performance: capacity retention rate

Under the condition of 25 °C, a cycle refers to charging and discharging once with a constant current and then a constant voltage at a rate of 1 C. The first cycle is denoted as C0, the nth cycle is Cn, and the capacity retention rate of each cycle is Cn/C0.

### 3.3. Gas production test (storage gas production at 70 °C for 40 days)

At 25 °C, the lithium-ion battery was first charged to 4.3 V with a constant current of 1/3 C, then charged at a constant voltage with a current of 0.025 C, and charged to 4.3 V. The volume of the lithium-ion battery was measured as V0 by placing the lithium-ion battery into deionized water using a drainage method, and then stored at a condition of 70 °C. The battery cell volume change was obtained every six days, and the nth time was Vn. Volume expansion rate (%) of the lithium-ion battery after storage at 70 °C = (Vn - V0) / V0 × 100%.

### 3.4. Storage performance (capacity retention rate at 60 °C for 50 days)

At 25 °C, the battery cell was charged to 4.3 V at a constant current of 1 C, then charged at a constant voltage with a current of 0.05 C, charged to 4.3 V, then discharged to 2.8 V at a constant current of 1 C, and discharged at a constant voltage with a current of 0.05 C. The measured capacity was recorded as C0.

The battery cell is charged to 4.3 V at 1 C current, and charged at a constant voltage with a current of 0.05 C. The fully charged battery cell was stored in a constant temperature furnace at 60 °C. The battery cell was taken out every 30 days, and at 25 °C, discharged to 2.8 V at a constant current of 1 C, and then discharged at a constant voltage of 0.05 C. The measured capacity was Cn. Capacity retention rate = Cn / C0.

The second step was repeated to obtain a variation diagram of a battery capacity retention rate over time.

### 3.5. Number of cycles (number of cycles at 25 °C to a capacity retention rate of 80%)

At 25 °C, the lithium-ion battery was charged to a voltage of 4.3 V at a constant current of 1 C, then charged at a 4.3 V constant voltage with a current of 0.05 C, and subsequently discharged at a constant current of 1 C until the final voltage was 2.8 V and the capacity was C1. The above steps were sequentially repeated, and the nth measured capacity was Cn. Capacity retention rate (%) = (the nth discharge capacity / the first cycle discharge capacity) × 100%. The cycle was continued until the capacity retention rate of the battery cell decayed to 80%.

The test results are recorded in Table 2.

**Table 2**

| | Compaction density (g/cm³) | Gram Capacity (mAh/g) | Capacity retention rate after 50 cycles | Capacity retention rate after 100 cycles | Storage gas production at 70°C for 40 days (mL/Ah) | Storage performance (capacity retention rate at 60 °C for 50 days) | Number of cycles at 25 °C to a capacity retention rate of 80% |
|---|---|---|---|---|---|---|---|
| Embodiment 1 | 3.50 | 185 | 97.0% | 96.5% | 7.00 | 97.0% | 2500 |
| Embodiment 2 | 3.51 | 210 | 96.2% | 96.0% | 9.00 | 97.3% | 2600 |
| Embodiment 3 | 3.60 | 215 | 95.7% | 95.5% | 11.20 | 97.1% | 2550 |
| Embodiment 4 | 3.60 | 208 | 97.1% | 96.8% | 8.60 | 97.7% | 2700 |
| Embodiment 5 | 3.60 | 215 | 96.0% | 95.8% | 9.60 | 96.9% | 2400 |
| Embodiment 6 | 3.60 | 214 | 97.2% | 96.6% | 8.20 | 97.8% | 2590 |
| Embodiment 7 | 3.60 | 209 | 97.0% | 96.5% | 8.70 | 97.4% | 2650 |
| Embodiment 8 | 3.60 | 212 | 96.5% | 96.1% | 9.20 | 97.0% | 2500 |
| Embodiment 9 | 3.60 | 211 | 96.9% | 96.7% | 8.50 | 97.5% | 2550 |
| Embodiment 10 | 3.45 | 210 | 95.5% | 95.0% | 9.50 | 96.8% | 2400 |
| Embodiment 11 | 3.48 | 210 | 97.1% | 96.8% | 8.80 | 97.5% | 2700 |
| Embodiment 12 | 3.55 | 210 | 96.9% | 96.7% | 8.90 | 97.4% | 2677 |
| Embodiment 13 | 3.46 | 210 | 95.6% | 95.1% | 12.20 | 96.5% | 2300 |
| Embodiment 14 | 3.48 | 210 | 97.3% | 96.9% | 8.50 | 97.0% | 2500 |
| Embodiment 15 | 3.55 | 212 | 95.0% | 94.6% | 9.50 | 97.0% | 1800 |
| Embodiment 16 | 3.55 | 202 | 97.0% | 96.8% | 8.70 | 97.4% | 2700 |
| Embodiment 17 | 3.55 | 198 | 97.1% | 96.8% | 8.60 | 97.5% | 2760 |
| Embodiment 18 | 3.55 | 211 | 95.3% | 95.0% | 8.90 | 96.2% | 2500 |
| Embodiment 19 | 3.55 | 212 | 94.8% | 94.2% | 11.50 | 96.0% | 2100 |
| Embodiment 20 | 3.55 | 212 | 94.5% | 93.9% | 12.10 | 95.8% | 2000 |
| Embodiment 21 | 3.55 | 213 | 92.0% | 91.5% | 15.10 | 95.0% | 1800 |
| Embodiment 22 | 3.55 | 209 | 96.5% | 96.2% | 8.90 | 97.4% | 2700 |
| Embodiment 23 | 3.55 | 205 | 96.9% | 96.4% | 7.80 | 97.6% | 2800 |
| Embodiment 24 | 3.55 | 210 | 95.2% | 94.3% | 8.20 | 95.8% | 2050 |
| Embodiment 25 | 3.65 | 210 | 97.1% | 96.8% | 8.90 | 96.8% | 2750 |
| Embodiment 26 | 3.48 | 208 | 96.5% | 96.0% | 8.50 | 97.0% | 2060 |
| Embodiment 27 | 3.57 | 212 | 96.6% | 95.9% | 9.50 | 96.3% | 2200 |
| Embodiment 28 | 3.60 | 213 | 96.2% | 95.1% | 10.40 | 96.0% | 2050 |
| Embodiment 29 | 3.58 | 212 | 96.0% | 95.2% | 12.00 | 95.2% | 1960 |
| Embodiment 30 | 3.55 | 210 | 95.8% | 95.0% | 14.00 | 94.6% | 1860 |
| Embodiment 31 | 3.56 | 211 | 96.0% | 95.1% | 9.30 | 96.5% | 2200 |
| Embodiment 32 | 3.54 | 212 | 95.8% | 95.0% | 9.50 | 96.4% | 2130 |
| Embodiment 33 | 3.50 | 212 | 95.6% | 94.8% | 9.70 | 96.1% | 2000 |
| Comparative Embodiment 1 | 3.65 | 212 | 90.0% | 89.0% | 15.40 | 90.0% | 1000 |
| Comparative Embodiment 2 | 3.65 | 198 | 92.0% | 91.0% | 13.20 | 95.0% | 1500 |
| Comparative Embodiment 3 | 3.65 | 208 | 89.0% | 85.0% | 20.00 | 86.0% | 800 |

From the comparison of Embodiment 3 and Embodiments 4 to 9, it can be seen that when the surface of the first lithium-nickel transition metal oxide or the second lithium-nickel transition metal oxide constituting the positive electrode material had a cladding layer, the capacity and cycle life of the material were significantly affected. For example, the coating of boron element significantly improved the capacity of the material, but the cycle performance correspondingly deteriorated, while the coating of aluminum element might significantly improve the cycle performance of the material, but the capacity was slightly decreased. From the comparison of Embodiments 10 to 14 and 25, it can be seen that when the content of the first lithium-nickel transition metal oxide as a monocrystalline in the positive electrode material was gradually increased, the cycle performance of the material was significantly improved. From the comparison of Embodiments 12 and 15 to 17, it can be seen that when the Zr content in the first lithium-nickel transition metal oxide and the second lithium-nickel transition metal oxide was increased, it was conducive to increasing the particle strength and thus improving the cycle performance, but the specific capacity of the battery was reduced. From the comparison of Embodiments 23 and 24, it can be seen that on the basis of no obvious increase in the Zr content, reducing the ratio d of the Zr content in the two materials limited the exertion of material capacity and cycle performance, and it was difficult to achieve the optimal solution for mixed system capacity and cycle. From the comparison of Embodiments 12 and 19 to 21, it can be seen that the number of monocrystalline and polycrystalline particles per unit area was large, and the material capacity was improved, but the material cycle performance deteriorated significantly. From the comparison of Embodiments 25 to 33, it can be seen that the particle diameter distribution concentration degree S value mainly affected the compaction density of the material, and the larger the S value in a certain range, the higher the compaction density, but an excessively large value would affect and deteriorate the material cycle performance and compaction density. The capacity and cycle of the material were decreased as Dᵥ50 was increased, but for storage performance, Dᵥ50 being higher would have an improvement effect.

Although this application has been described with reference to preferred embodiments, various improvements may be made thereto and components thereof may be replaced with equivalents without departing from the scope of this application. Particularly, technical features mentioned in the embodiments may be combined in any manner as long as there is no structural conflict. this application is not limited to the specific embodiments disclosed in this specification, but includes all technical solutions falling within the scope of the claims.

## Claims

1. A positive active material, comprising a first lithium-nickel transition metal oxide and a second lithium-nickel transition metal oxide, wherein both the first lithium-nickel transition metal oxide and the second lithium-nickel transition metal oxide contain zirconium, and a molar content of zirconium element in the first lithium-nickel transition metal oxide is less than a molar content of zirconium element in the second lithium-nickel transition metal oxide, the first lithium-nickel transition metal oxide is of one or more structures of a monocrystalline particle or a quasi-monocrystalline particle, and the second lithium-nickel transition metal oxide is a secondary particle formed by aggregation of a plurality of primary particles.

2. The positive active material according to claim 1, wherein a ratio of the molar content of zirconium element in the first lithium-nickel transition metal oxide to the molar content of zirconium element in the second lithium-nickel transition metal oxide is d, and 0.5 ≤ d < 1, optionally 0.7 < d < 1, and further optionally 0.8 ≤ d ≤ 0.9.

3. The positive active material according to claim 1, wherein particle strength of the first lithium-nickel transition metal oxide is greater than particle strength of the second lithium-nickel transition metal oxide;
optionally, the particle strength of the first lithium-nickel transition metal oxide is 30 MPa to 300 MPa, and further optionally 110 MPa to 230 MPa, and/or
the particle strength of the second lithium-nickel transition metal oxide is 20 MPa to 250 MPa, and further optionally 90 MPa to 210 MPa; and/or
a difference between the particle strength of the first lithium-nickel transition metal oxide and the particle strength of the second lithium-nickel transition metal oxide is between 10 MPa and 50 MPa, and further optionally between 20 MPa and 30 MPa.

4. The positive active material according to claim 1, wherein a number of the monocrystalline particle contained in the quasi-monocrystalline particle of the first lithium-nickel transition metal oxide in an SEM image is ≤ 5/µm², and/or a number of the primary particles contained in the secondary particle of the second lithium-nickel transition metal oxide in an SEM image is 3/µm² to 30/µm².

5. The positive active material according to claim 1, wherein a volume particle diameter distribution curve of the positive active material is a bimodal curve, a low peak particle diameter of the bimodal curve is a first peak particle diameter, a high peak particle diameter is a second peak particle diameter, and the first peak particle diameter is 2 µm to 6 µm, and/or
the second peak particle diameter is 6 µm to 15 µm, and/or
peak separation fitting is performed on the bimodal curve to obtain a small particle fitted peak pattern and a large particle fitted peak pattern, and a particle diameter concentration degree S1 obtained according to the small particle fitted peak pattern and a particle diameter concentration degree S2 obtained according to the large particle fitted peak pattern are each independently 0.1-5, and optionally, the S1 and the S2 are each independently 0.1-3, wherein S1 = (Dv₁90 -Dv₁10)/Dv₁50, S2 = (Dv₂90 -Dv₂10)/Dv₂50, Dv₁N is a particle diameter corresponding to a cumulative volume distribution percentage reaching N% in the small particle fitted peak pattern, Dv₂N is a particle diameter corresponding to a cumulative volume distribution percentage reaching N% in the large particle fitted peak pattern, and N is 10, 50 or 90;
a volume particle diameter distribution of the first lithium-nickel transition metal oxide satisfies a small particle fitted peak pattern; and a volume particle diameter distribution of the second lithium-nickel transition metal oxide satisfies the large particle fitted peak pattern.

6. The positive active material according to claim 1, wherein chemical formulas of the first lithium-nickel transition metal oxide and the second lithium-nickel transition metal oxide are each independently LiₐNiₓCo_{y}M_{z}R_{b}O_{c}, wherein 0.9 ≤ a ≤ 1.2, 0.3 ≤ x ≤1, 0 ≤ y ≤ 0.4, 0 ≤ z ≤ 0.2, 0 < b ≤ 0.2, 1.8 ≤ c ≤ 2.2, x + y + z + b = 1, M is one or two of Mn and Al, R comprises one or more of Na, Sb, C, K, Ca, Zr, Sr, Al, B, Ba, Nb, W, Mo, Co, P, and C, and R must contain Zr;
optionally, a molar amount of Zr in R per mole of the first lithium-nickel transition metal oxide or the second lithium-nickel transition metal oxide is less than or equal to 0.15; further optionally, the molar amount of Zr in R per mole of the first lithium-nickel transition metal oxide or the second lithium-nickel transition metal oxide is less than or equal to 0.11; and/or
a Ni element content in the first lithium-nickel transition metal oxide is 0.5 ≤ x ≤ 0.98, and the Ni element content in the second lithium-nickel transition metal oxide is 0.6 ≤ x ≤ 0.98.

7. The positive active material according to claim 1, wherein the first lithium-nickel transition metal oxide and the second lithium-nickel transition metal oxide each independently comprise a core and a cladding layer covering the core, and a chemical formula of the core is each independently LiₐNiₓCo_{y}M_{z}R_{b}O_{c}, wherein 0.9 ≤ a ≤ 1.2, 0.3 ≤ x ≤ 1, 0 ≤ y ≤ 0.4, 0 ≤ z ≤ 0.2, 0 < b ≤ 0.2, 1.8 ≤ c ≤ 2.2, x + y + z + b = 1, M is one or two of Mn and Al, R comprises one or more of Na, Sb, C, K, Ca, Zr, Sr, Al, B, Ba, Nb, W, Mo, Co, P, and C, and R must contain Zr;
optionally, the molar amount of Zr in R of the first lithium-nickel transition metal oxide or the second lithium-nickel transition metal oxide is less than or equal to 0.15; and/or
a Ni element content in the first lithium-nickel transition metal oxide is 0.5 ≤ x ≤ 0.98, and the Ni element content in the second lithium-nickel transition metal oxide is 0.6 ≤ x ≤ 0.98; and/or
the cladding layer comprises one oxide cladding layer or two oxide cladding layers; and/or
an inner layer of the two oxide cladding layers is an island-shaped oxide cladding layer, and an outer layer of the two oxide cladding layers is a layered oxide cladding layer; and/or
a thickness of the cladding layer is 0.1 nm to 200 nm, optionally 0.1 nm to 100 nm, and further optionally 0.1 nm to 50 nm.

8. The positive active material according to claim 7, wherein an element of the oxide cladding layer comprises one or more of a group consisting of Zr, Al, P, B, Ti, W, Co, Nb, Mo, and Mg.

9. The positive active material according to claim 1, wherein a weight content of the first lithium-nickel transition metal oxide in the positive active material is 10% to 95%, and optionally 50% to 90%.

10. A positive electrode plate, comprising a current collector and a positive film layer, wherein the positive film layer comprises a positive active material, wherein the positive active material is the positive active material according to claim 1.

11. A secondary battery, comprising a positive electrode plate, a negative electrode plate, a separator, and an electrolyte solution, wherein the positive electrode plate is the positive electrode plate according to claim 10.

12. An electrical device, comprising a secondary battery, wherein the secondary battery is selected from the secondary battery according to claim 11.
